# EUROPEAN PATENT APPLICATION

(11) **EP 4 152 598 A1**
(43) Date of publication of application: **22.03.2023**
(21) Application number: 22195855.6
(22) Date of filing: 15.09.2022
(51) Int. Cl.: H02S 20/26

(54) **A COVERING FOR ROOFS AND/OR FACADES OF BUILDINGS**

(30) Priority: 20.09.2021 IT 202100024035
(71) Applicant: Domutopia S.r.l., 20851 Lissone (IT)
(72) Inventor: Colombo, Claudio, 20854 Vedano al Lambro (IT)
(74) Representative: Perani & Partners S.p.A.

(57) **Abstract**

A covering for roofs and/or facades of buildings (1) comprising first covering panels (10) at least partially transparent and configured to produce electric power, second covering panels (20) at least partially transparent and configured to control the passage of light from and toward the interior of the building (100) and relative transparency thereof; a support structure (30) associated with the building (100) and configured to support the first covering panels (10) and the second covering panels (20) to define a first covering layer (40) and a second covering layer (50) respectively, the first covering layer (40) and the second covering layer (50) are overlapped with each other along an overlapping direction (X-X) incident to the first covering layer (40) and the second covering layer (50).

## Description

### Technical Field

The present invention relates to the field of construction and in particular to coverings for roofs and facades of buildings having light-transparent elements such as glass. Preferably, the present invention relates to buildings with low environmental impact and at least partially self-sufficient as well as employing large surfaces made of transparent material.

### State of the Art

Several solutions are known in the state of the art wherein buildings are provided with photovoltaic panels configured to produce electric power, e.g. placed on the roof. In addition, it is also known to provide such buildings with glazing on the facades or roof configured to improve brightness within the building rooms during daylight hours as well as to make the environment more comfortable for the building inhabitants. Specifically, a building with photovoltaic panels comprises a cast concrete slab, a roof with a wooden/metal structure and an insulating material covered with finishing roof tiles. Above the roof tiles, photovoltaic panels or windows are placed.

### Problems of the Prior Art

The known solutions have several disadvantages mainly related to failure to exploit the actual surfaces available on the building for positioning photovoltaic panels and the heat exchange caused by the use of large windows during the different seasons. Specifically, the use of photovoltaic panels, for example, on the roof prevents the entire surface of the roof from being exploited, in case a portion of roof made of glass is present. On the other hand, the use of large glazing leads to an increase in heat exchange between the inside and outside of the building, which in summer causes an increase in inner temperatures and in winter a decrease thereof. Such temperature variations lead to the activation of cooling and heating systems with a consequent increase in the building maintenance costs.

In addition, photovoltaic panels used and placed on the roof tiles are unsightly and not very functional.

### Object of the Invention

The object of the invention is to create a covering for roofs and facades of buildings capable of overcoming the drawbacks of the prior art mentioned above.

In particular, it is the object of the present invention to provide a covering for roofs and facades of buildings capable of optimising the production of electric power and improve the management of heat exchange between the interior and exterior of the building to increase the comfort of its inhabitants.

The defined technical task and the specified objects are substantially achieved by a covering for roofs and facades of buildings comprising the technical characteristics set forth in one or more of the accompanying claims.

### Advantages of the invention

Advantageously, the covering of the present invention makes it possible to improve electric power production by exploiting the entire surface of the roof and/or facade of a building.

Advantageously, the roof of the present invention makes it possible to adjust and optimise the heat exchange between the interior and exterior of the building as well as the brightness of the rooms covered by the covering.

Advantageously, the covering of the present invention makes it possible to reduce the maintenance costs of the building and improves the comfort of its inhabitants.

Advantageously, the covering of the present invention makes it possible to provide a transparent roof that creates energy, but also has a good external impact as well as being able to have an economic impact and create synergies to be developed.

Advantageously, the covering of the present invention makes it possible to combine the aesthetic effects of transparency with energy production, ensuring a better impact in terms of aesthetics, ease of maintenance as well as electric power production. Specifically, the covering of the present invention, where positioned, makes it possible to eliminate the concrete slab, roof tiles and all its support and insulating structures. In fact, the covering of the present invention makes it possible to cover the entire surface of the roof with low-efficiency photovoltaic glass, however throughout several tens of square metres. It will thereby be possible to see the sky directly from inside the building, allow the sun rays to enter and heat the environment, and also enable the production of vitamin D for the human body. Other considerable advantages are to be found from the psychological and mood perspective by simulating a building that gives the idea of being outdoors.

Further advantages of the covering of the present invention are addressed to children, the elderly and the disabled who do not spend as much time outdoors as they would like to while providing protection by adjusting the transparency of the covering.

### BRIEF DESCRIPTION OF THE DRAWINGS

Further characteristics and advantages of the present invention will become more apparent from the indicative and thus non-limiting description of a preferred, but not exclusive, embodiment of a covering for roofs and facades of buildings, as shown in the accompanying drawings, wherein:

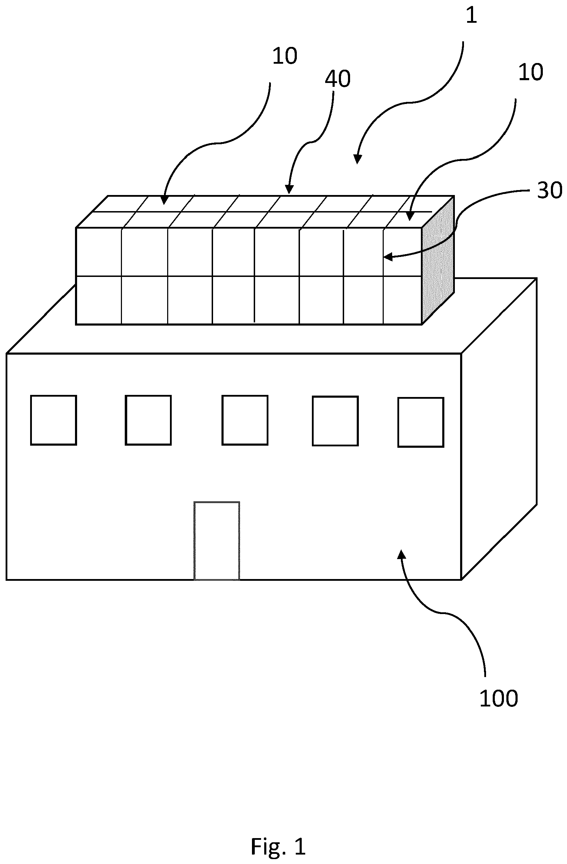

- Figure 1 shows a schematic view of a covering for roofs and facades of buildings arranged on a building according to an embodiment of the present invention;

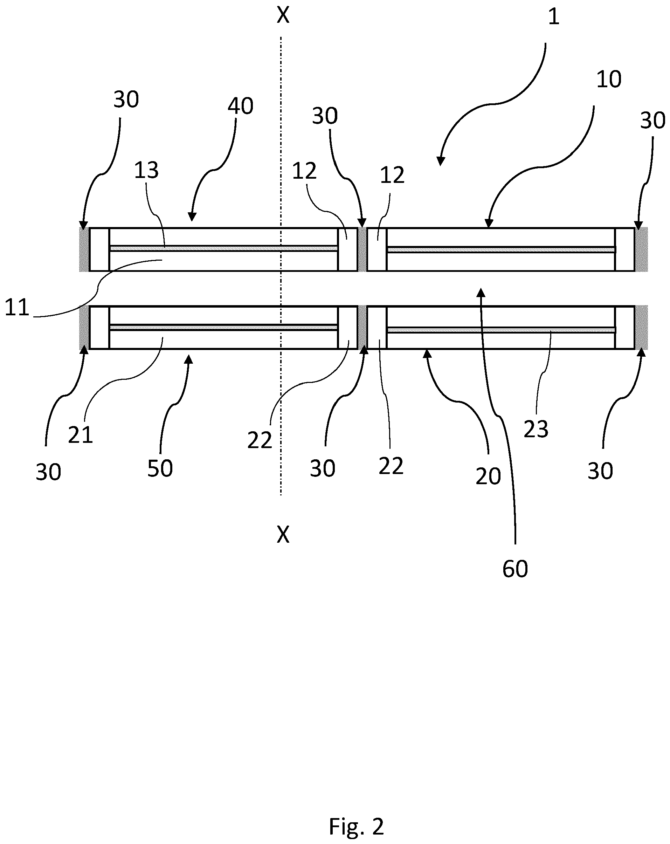

- Figure 2 shows a schematic cross-section view of a portion of covering of Figure 1 with some parts removed to better show others.

### DETAILED DESCRIPTION

Even when not explicitly highlighted, the individual features described with reference to the specific embodiments must be considered as accessories and/or exchangeable with other features, described with reference to other embodiments.

The present invention relates to a covering for roofs and facades of buildings globally referred to as 1 in the Figures.

The covering 1 is configured to allow the passage of light from the outside of the building to the inside of the building and vice versa, being at least partially transparent, preferably totally transparent apart from the supports. In addition, the covering 1 is configured to simultaneously produce electric power, preferably photovoltaic electric power while maintaining transparency properties. Specifically, the covering 1 combines the properties of photovoltaic electric power generation systems and of windows, thus enabling transparency to light and simultaneous production of electric power during daylight hours. In addition, as explained hereinafter, the covering 1 also provides thermal and acoustic insulation as well as transparency control for the passage of light from and toward the building.

It is worth noting that a building 100 means any construction that is inhabitable and/or frequented by one or more users, such as villas, cottages, apartment blocks, shopping centres, warehouses, buildings. In addition, it should be noted that the roof may be continuous (such as horizontal to the ground and/or dome) or discontinuous (such as inverted "V" roofs).

The covering 1 comprises first covering panels 10 which are at least partially transparent and configured to produce electric power. Preferably, each first covering panel 10 comprises one or more first glass sheets 11. It is worth noting that in alternative embodiments, the first glass sheets 11 may be replaced by first Plexiglas sheets used alone or in combination with the first glass sheets 11. Reference will be made hereinafter to the first glass sheets 11 without however excluding the replacement or combination of first sheets of Plexiglas.

These first glass sheets 11 have transparency properties allowing the passage of light from and toward the outside of the building 100 in addition to the production of electric power. More preferably, each first covering panel 10 further comprises first connection means 12 configured to retain the respective first glass sheets 11 and allow the mutual electrical and mechanical connection between the first adjacent covering panels 10.

According to a preferred embodiment, each first covering panel 10 includes a transparent photovoltaic film 13 for electric power generation. Such photovoltaic film 13 is preferably arranged between two sheets of glass or Plexiglas 11. Specifically, each first panel 10 has a multilayer structure wherein the photovoltaic film 13 is arranged between the sheets of glass or Plexiglas 11.

In detail, the first covering panels 10 define photovoltaic solar panels configured to produce electric power and at the same time having transparency characteristics to allow light to pass through. In other words, first covering panels 10 allow visibility from the inside toward the outside of the building and vice versa while producing at the same time electric power.

According to a preferred embodiment, the first covering panels 10 comprise glass sheets made of crystalline silicon and/or glass sheets made of amorphous silicon. The amorphous silicon used may have the following technical characteristics: i) a light transmission of the dark type, 10%, 20%, 30% , with opacity and semitransparency properties, ii) an efficiency of 2.8% - 5.76% and inversely proportional to transparency, iii) a higher kWh efficiency at the same installed power if compared to crystalline silicon kWp, iv) better behaviour in the presence of accidental shading and independent of inclination and orientation (more suitable for facade applications), v) low temperature coefficient and performs well even at high operating temperatures and low light intensities, vi) unobstructed view vii) cheaper than crystalline silicon (c-Si). As regards crystalline silicon, on the other hand, it may have the following properties: i) it may be of the mono- and polycrystalline type, ii) 12- or 15-cm square cells, iii) an efficiency of 13% - 20% and higher efficiency in terms of kWp installed per square metre than amorphous silicon, iv) higher nominal power per square metre (Wp/sq.m.), v) produces more electricity with direct solar radiation (coverings and tilted favourably to the sun), vi) maximum flexibility in formal customisation of modules with triangular, trapezoidal shape, and so on. For example, calculating an efficiency ranging from 13% to 20% as stated, the power Wp per sqm will range from 152.23 Wp to 234.2Wp per sqm. An average house with 3 kWp photovoltaic output generates a 3300-4500 kWh yearly output, about 11 kWh per day. With an average power of 193.2 Wp per square metre. This will give a power of 13,525 Wp on 70 square metres. This peak value generates an average yearly output of about 15,837 kWh, 25% of which will be related to household consumption.

According to a preferred embodiment, the covering 1 comprises control and management means configured to manage and store the electric power produced by the first panels 10 in order to make the most of it.

The covering 1 comprises second covering panels 20, which are at least partially transparent and configured to control the passage of light from and toward the interior of the building 100 and the relative transparency. Specifically, the second covering panels 20 allow visibility from the inside to the outside of the building and vice versa as well as transparency control, for example, by shading the panels. Preferably, the second covering panels 20 comprise second glass sheets 21. It is worth noting that in alternative embodiments, the second glass sheets 21 may be replaced by second sheets of Plexiglas used alone or in combination with the second glass sheets 21. Reference will be hereinafter made to the second glass sheets 21 without however excluding the replacement or combination of second glasses of Plexiglas.

These second glass sheets 21 have transparency properties allowing the passage of light from and toward the outside of the building 100 as well as the relative control of the passage of light and transparency. In other words, the second covering panels 20 are configured for the selective passage of light as well as the control of the relative transparency. More preferably, each second covering panel 20 further comprises second connection means 22 configured to retain the respective second glass sheets 21 and allow for mutual electrical and mechanical connection between adjacent second covering panels 20.

Specifically, each second panel 20 defines an insulated glazing unit wherein the transparent portion is located in the centre (glass sheets) while the portion surrounding the centre has the necessary elements for the support, mechanical and, possibly, electrical connection for controlling the respective insulated glazing unit.

According to a preferred embodiment, each second covering panel 20 comprises an electrochromic film 23 configured to adjust the passage of light from and toward the interior of the building 100. This type of film allows to control the transparency of the panel as well as the passage of light from and toward the building 100.

It is worth noting that with electrochromic films, the cause of the change in transparency depends on an electrical voltage. Such films represent the traditional example of layered glass, the structure consists of an electrolyte that is embedded between two electrodes, which in turn are embedded between two transparent conductors. This entire structure is then sandwiched between two sheets of glass or Plexiglas. The process adopted by this type of panel is chemical in nature, in fact, when an electrical voltage is applied, an electrochemical reaction occurs consisting in a migration of ions from one electrode to the other, when a voltage is then applied to the system, the panel becomes coloured, losing its transparency, which can be restored by simply reversing the polarity.

According to a preferred embodiment, each second panel 20 has a multilayer structure configured to provide acoustic and thermal insulation. Specifically, the multilayer structure of the second panel comprises the electrochromic film 23 arranged between two first sheets of glass or Plexiglas 21.

Specifically, each second panel 20 has a multilayer structure wherein one or more sheets of glass or Plexiglas 21 with electrochromic film 23 are configured to adjust transparency as well as acoustic and thermal insulation.

Advantageously, the use of a multilayer structure allows to reduce energy loss by providing proper thermal insulation, making it possible to save, for example, up to 900 litres of heating oil.

The covering 1 comprises a support structure 30 associated with the building 100 and configured to support the first covering panels 10 and the second covering panels 20 to define a first covering layer 40 and a second covering layer 50 respectively. Preferably, the support structure 30 includes a support frame for the covering panels 10, 20 in order to retain and support them. Specifically, the support structure 30 is configured to provide the structural rigidity to support the panels 10, 20 and define the covering layers 40, 50. It is worth noting that the support structure 30 is made of metal and is preferably provided with means configured to allow the passage of cables from the first panels 10 to one or more accumulators in signal communication with the control and management means.

In detail, the first covering layer 40 and the second covering layer 50 overlap each other along an overlapping direction X-X which is incident upon the first covering layer 40 and the second covering layer 50. The overlapping of layers 40, 50 allows to combine the typical transparency properties of a window with the properties of electric power generation systems as well as ensures thermal and acoustic insulation.

Specifically, the first covering layer 40 and the second covering layer 50 are arranged one above the other along the overlapping direction X-X, which may preferably be perpendicular to both the covering layers 40, 50 at each overlapping position.

Preferably, the first covering layer 40 comprises a plurality of first covering panels 10 mechanically and electrically connected adjacent to each other and retained by the support structure 30 by means of the relative first connection means 12. By contrast, the second covering layer 50 comprises a plurality of second covering panels 20 mechanically and electrically connected adjacent to each other and retained by the support structure 30 by means of the relative second connection means 22.

More preferably, the first covering layer 40 overlaps the second covering layer 50 and faces the exterior of the building 100. Specifically, the first covering layer 40 that is responsible for producing electric power is arranged in contact with the environment outside the building.

Even more preferably, the first covering layer 40 has an outer surface facing the environment and an opposite inner surface facing the second covering layer 50. It should be noted that this second covering layer 50 also has an outer surface, however, facing the inner surface of the first covering layer 40 and an opposite inner surface facing the inside of the building 100.

According to a preferred embodiment, the first covering layer 40 and the second covering layer 50 are spaced apart along the overlapping direction X-X to define a gap 60 configured to provide thermal insulation. Specifically, the first covering layer 40 and the second covering layer 50 are separated from each other to define the gap 60 between the inner surface of the first covering layer 40 and the outer surface of the second covering layer 50. It is worth noting that the gap 60 that is empty (wherein air has been extracted) or filled with inert gas, e.g. argon, allows the building to be thermally insulated from the outer environment and vice versa. In other words, the covering 1 comprises a multilayer structure defined by the first covering panels 10 (first layer), gap 60 (second layer) and the second covering panels 20 (third layer).

According to a preferred embodiment, the first covering layer 40 has a first covering portion configured to produce a first portion of electric power and a second covering portion configured to produce a second portion of electric power. Preferably, the first covering portion has a higher Kwh efficiency than the second covering portion, while the second covering portion has a higher Wp/sqm efficiency than the first covering portion. More preferably, the first panels 10 defining the first covering portion comprise glass sheets 11 made of crystalline silicon and the first panels 10 defining the second covering portion comprise glass sheets 11 made of amorphous silicon.

According to a preferred embodiment, the first covering layer 40 and the second covering layer 50 entirely define the roof and/or one or more facades of a building 100. It is thereby possible to optimise the production of electric power and at the same time better manage thermal and acoustic insulation as well as control the transparency and passage of light from and toward the building 100.

## Claims

1. A covering for roofs and/or facades of buildings (1) comprising:
- first covering panels (10), which are at least partially transparent and configured to produce electric power;
- second covering panels (20), which are at least partially transparent and configured to control the passage of light from and toward the interior of the building (100) and the resulting transparency;
- a support structure (30) associated with the building (100) and configured to support the first covering panels (10) and the second covering panels (20) to define a first covering layer (40) and a second covering layer (50) respectively;
**characterized in that:**
- the first covering layer (40) and the second covering layer (50) overlap each other along an overlapping direction (X-X) which is incident upon the first covering layer (40) and the second covering layer (50).

2. The covering (1) as claimed in claim 1 wherein:
- the first covering layer (40) comprises a plurality of first covering panels (10) which are mechanically and electrically connected next to each other and retained by the support structure (30);
- the second covering layer (50) comprises a plurality of second covering panels (20) which are mechanically and electrically connected next to each other and retained by the support structure (30);
- the first covering layer (40) overlaps the second covering layer (50) and faces the exterior of the building (100).

3. The covering (1) as claimed in claim 1 or 2, wherein the first covering layer (40) and the second covering layer (50) are spaced apart along the overlapping direction (X-X) to define a gap (60) configured to provide thermal insulation.

4. The covering (1) as claimed in any of claims 1 to 3, wherein the first covering layer (40) and the second covering layer (50) entirely define the roof and/or one or more facades of a building (100).

5. The covering (1) as claimed in any of claims 1 to 4, wherein each first covering panel (10) and each second covering panel (20) comprises, respectively:
- one or more first sheets of glass or plexiglas (11) and one or more second sheets of glass or plexiglas (21);
- first connection means (12) and second connection means (22) configured to couple the support structure (30) to corresponding adjacent first covering panels (10) and second covering panels (20) and to retain the respective first glass sheets (11) and second glass sheets (12).

6. The covering (1) as claimed in claim 5, wherein:
- each first covering panel (10) comprises a transparent photovoltaic film (13) arranged for electric power generation;
- each second covering panels (20) comprises an electrochromic film (23) configured to adjust the passage of light from and toward the interior of the building (100).

7. The covering (1) as claimed in claim 6, wherein:
- each first panel (10) has a multilayer structure in which the photovoltaic film (13) is arranged between the sheets of glass or Plexiglas (11);
- each second panel (20) has a multilayer structure configured to provide sound and heat insulation, said multilayer structure of the second panel comprising the electrochromic film (23) arranged between two first sheets of glass or Plexiglas (21).

8. The covering (1) as claimed in any of claims 1 to 7, wherein the first covering layer (40) has a first covering portion configured to produce a first portion of electric power and a second covering portion configured to produce a second portion of electric power, said first covering portion having a higher energy efficiency in terms of kWh than the second covering portion and said second surface having a higher efficiency in terms of Wp/sqm than the first surface, the first panels (10) defining the first covering portion comprising glass sheets made of crystalline silicon and the first panels (10) defining the second covering portion comprising glass sheets made of amorphous silicon.

9. The covering (1) as claimed in any of claims 1 to 8, wherein each first panel (10) defines a photovoltaic glass panel and each second panel (20) defines an insulated glazing unit.

10. The covering (1) as claimed in any of claims 1 to 9, wherein the covering (1) comprises control and management means configured to manage and accumulate the electric power produced by the first panels (10).
